Europäisches Patentamt

**European Patent Office**

Office européen des brevets

(11) Veröffentlichungsnummer: **0 086 894**

**A1**

(12) **EUROPÄISCHE PATENTANMELDUNG**

(21) Anmeldenummer: **82111787.6**

(22) Anmeldetag: **18.12.82**

(51) Int. Cl.³: **C 08 C 19/10**

(30) Priorität: **19.02.82 DE 3205990**
**24.07.82 DE 3227685**
**24.07.82 DE 3227684**

(43) Veröffentlichungstag der Anmeldung:
**31.08.83 Patentblatt 83/35**

(84) Benannte Vertragsstaaten:
**AT BE CH DE FR GB IT LI NL SE**

(71) Anmelder: **CHEMISCHE WERKE HÜLS AG**
**- RSP Patente / PB 15 - Postfach 13 20**
**D-4370 Marl 1(DE)**

(72) Erfinder: **Kampf, Wolfgang, Dr.**
**Im Wienäckern 60 b**
**D-4358 Haltern(DE)**

(72) Erfinder: **Herrmann, Christoph, Dr.**
**Siedlungsstrasse 3**
**D-4370 Marl(DE)**

(54) **Verfahren zur Isomerisierung von isolierten zu konjugierten Doppelbindungen in niedermolekularen Homo und/oder Copolymeren von 1,3-Dienen.**

(57) Verfahren zur Isomerisierung von isolierten zu konjugierten Doppelbindungen in niedermolekularen Homo- und/oder Copolymeren von 1,3-Dienen mit Hilfe eines Isomerisierungskatalysators und gegebenenfalls in Gegenwart eines Lösemittels, wobei man als Isomerisierungskatalysator eine Mischung aus

a) einem Hydroxid der Alkalimetalle Kalium, Rubidium oder Caesium und einem Alkohol oder

b) einem Lithium- oder Natriumalkoholat und einem Kalim-, Rubidium- oder Caesiumsalz oder

c) Natriumhydroxid, einem Alkohol und einer polaren, aprotischen Verbindung einsetzt und
die Isomerisierung bei einer Temperatur von 80 bis 220°C durchführt.

Verfahren zur Isomerisierung von isolierten zu konjugierten Doppelbindungen in niedermolekularen Homo- und/oder Copolymeren von
1,3-Dienen

Bei der Homopolymerisation von 1,3-Dienen sowie bei deren Copolymerisation untereinander oder mit vinylsubstituierten Aromaten erhält man Polymere mit isolierten Doppelbindungen in der Hauptkette.

Es ist jedoch bekannt, daß nieder- und hochmolekulare Verbindungen
mit konjugierten Doppelbindungen den entsprechenden Verbindungen
mit isolierten Doppelbindungen an Reaktivität und damit auch an Attraktivität überlegen sind. Aus diesem Grunde wurden bereits Verfahren zur Herstellung von Verbindungen mit konjugierten Doppelbindungen entwickelt. Man kann dabei z. B. so vorgehen, daß man 1,3-
Diene mit Acetylen copolymerisiert [J. Furukawa et al., Journ.
Polym.Sci., Polym. Chem. Ed., Vol. 14, 1213-19 (1976)]. Eine
andere und wirtschaftlichere Möglichkeit ist die Isomerisierung von
isolierten zu konjugierten Doppelbindungen. Zur Durchführung dieser
Isomerisierung wurden die unterschiedlichsten Katalysatorsysteme
eingesetzt.

So ist aus der DE-AS 11 74 071 ein Verfahren zur Isomerisierung
von Butadienpolymerisaten bekannt, bei dem man die Butadienpolymerisate in Gegenwart geringer Mengen von Übergangsmetallen der
VI. bis VIII. Gruppe des Periodischen Systems der Elemente und
bzw. oder von Verbindungen, in denen diese Metalle im nullwertigen
Zustand vorliegen, auf Temperaturen zwischen 100 und 300 $^{\circ}$C erhitzt.

Die Nachteile dieses Verfahrens bestehen darin, daß die eingesetzten
Isomerisierungskatalysatoren relativ teuer und nicht leicht zu handhaben sind. Außerdem bewirken sie eine cis-trans-Isomerisierung,
die zum Verlust von reaktiven cis-1,4-Strukturen führt.

Weiterhin ist gemäß dem Verfahren der DE-OS 23 42 885 die Kombination aus einer organischen Alkalimetallverbindung und einem speziellen Diamin als Isomerisierungskatalysator für niedermolekulare Homo- und Copolymere des Butadiens einsetzbar.

Der chelatisierende Effekt der eingesetzten Diamine bedingt jedoch einen relativ hohen Gehalt an Alkalimetallionen im Polymeren, der sich beispielsweise bei dessen Einsatz im Lacksektor negativ auswirkt. Außerdem ergibt die als bevorzugt beschriebene Kombination von Polymerisation und Isomerisierung nicht den für die Trocknungseigenschaften von niedermolekularen Polybutadienen vorteilhaften hohen Gehalt an cis-1,4-Strukturen.

Aus der DE-PS 11 56 788 und der DE-AS 11 56 789 sind ferner Verfahren zur Umwandlung von Fettsäureestern einwertiger Alkohole mit isolierten Doppelbindungen in Fettsäureester mit konjugierten Doppelbindungen bekannt, bei denen als Isomerisierungskatalysatoren Alkalialkoholate eingesetzt werden.

Eine Übertragung dieser Verfahren auf andere Verbindungsklassen, war allein deshalb nicht zu erwarten, weil die Isomerisierungsaktivität bereits bei Übergang auf Ester mehrwertiger Alkohole, wie beispielsweise natürlich vorkommende Öle, deutlich zurückging.

Insofern war es überraschend, daß es mit Hilfe von Natrium- und Kaliumalkoholaten möglich war, in Homo- und/oder Copolymeren von 1,3-Dienen isolierte in konjugierte Doppelbindungen umzuwandeln (DE-OS 29 24 598). Solche ungesättigten Polymere unterscheiden sich nämlich in der Stellung der Doppelbindungen (1,5-Dien-Strukturen) wesentlich von den Fettsäureestern (1,4-Dien-Strukturen).

Aufgabe der vorliegenden Erfindung war es nun, das Verfahren der DE-OS 29 24 598 in einfacher und wirtschaftlicher Weise zu verbessern. Diese Aufgabe wurde überraschenderweise durch die in den Patentansprüchen beschriebenen Maßnahmen gelöst. Überraschend deswegen, weil es nicht zu erwarten war, daß im Falle des erfindungsgemäßen Katalysatorsystems a) eine Kombination aus Kalium-, Rubidium- oder Caesiumhydroxid und einem Alkohol anstelle des vorgebildeten Alkoholats eingesetzt werden kann, im Falle des erfindungsgemäßen Katalysatorsystems b) der Zusatz eines für sich allein isomerisierungsinaktiven Kalium-, Rubidium- oder Caesiumsalzes die Isomerisierungswirkung von Lithium- oder Natriumalkoholaten deutlich erhöht, und im Falle des erfindungsgemäßen Katalysatorsystems c) selbst die Kombination aus Natriumhydroxid und einem Alkohol befriedigende Ergebnisse liefert, wenn man als weitere Katalysatorkomponente eine aprotische Verbindung einsetzt.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander sowie Copolymerisate dieser 1,3-Diene mit vinylsubstituierten aromatischen Verbindungen, wie z. B. Styrol, $\alpha$-Methylstyrol, Vinyltoluol und Divinylbenzol. Der Gehalt an vinylsubstituierten aromatischen Verbindungen in diesen Copolymerisaten soll 50 Molprozent nicht überschreiten. Solche Produkte können nach vielen bekannten Verfahren des Standes der Technik (z. B. DE-PS 11 86 631, DE-AS 12 12 302, DE-PS 12 92 853, DE-OS 23 61 782 und DE-OS 23 42 885) hergestellt werden.

Neben den "echten" Copolymeren, die durch Polymerisation von 1,3-Dienen mit vinylsubstituierten aromatischen Verbindungen entstehen, sollen im Rahmen dieser Erfindung unter Copolymeren auch die Reaktionsprodukte aus 1,3-Dienen und aromatischen Kohlenwasserstoffen verstanden werden. Bei diesen "unechten" Copolymeren handelt es sich um arylierte Polyene, die dadurch erhalten werden, daß man ein 1,3-Dien, wie z. B. 1,3-Butadien oder Piperylen, in

0086894

Gegenwart eines geeigneten Katalysators in einem aromatischen Lösemittel, wie z. B. Benzol oder Toluol, reagieren läßt (DE-PSS 11 37 727 und 11 70 932, US-PS 3 373 216, JP-OS 49-32985, DE-OSS 28 48 804 und 30 00 708).

Bevorzugt werden bei dem erfindungsgemäßen Verfahren Polybutadiene mit Molekulargewichten ($\overline{M}n$) von 500 bis 20 000, besonders 600 bis 10 000, und ganz besonders 800 bis 6 000, eingesetzt. Die Mikrostruktur der Diene in den Homo- bzw. Copolymeren ist im allgemeinen nicht kritisch, jedoch ist es vorteilhaft, wenn mindestens 20 % der Doppelbindungen cis-1,4-Struktur besitzen.

Als Isomerisierungskatalysatoren werden bei dem vorliegenden Verfahren a) Mischungen aus einem Hydroxid der Alkalimetalle Kalium, Rubidium oder Caesium und einem Alkohol eingesetzt. Die genannten Hydroxide sind Produkte des Handels, die als solche in fester Form eingesetzt werden.

Zusammen mit den Hydroxiden werden ein- oder mehrwertige primäre, sekundäre oder tertiäre Alkohole, die gegebenenfalls funktionelle Gruppen, wie z. B. $-NH_2$, tragen können, mit bis einschließlich 10 Kohlenstoffatomen, vorzugsweise 3 bis 8 Kohlenstoffatomen, eingesetzt.

Typische Alkohole sind z. B. Methanol, Ethanol, n- und iso-Propanol, n-, iso-, sekundär- und tertiär-Butanol, 2-Ethylhexanol, Cyclohexanol, Benzylalkohol, Glykol, Diethylenglykol, Ethanolamin und Glycerin. Von diesen Vertretern werden die Butanole, Cyclohexanol und Benzylalkohol bevorzugt eingesetzt.

Das Alkalimetallhydroxid wird im allgemeinen in einer Menge von 0,2 bis 20, vorzugsweise 0,5 bis 10, Gewichtsteilen pro 100 Ge-

**0086894**

wichtsteile des zu isomerisierenden Homo- und/oder Copolymeren von 1,3-Dienen eingesetzt.

Die Menge des eingesetzten Alkohols beträgt im allgemeinen 0,5 bis 20, vorzugsweise 1 bis 10, Gewichtsteile pro 100 Gewichtsteile des zu isomerisierenden Produkts.

Was das molare Verhältnis der beiden Katalysatorkomponenten in der Mischung a) anbetrifft, so arbeitet man zweckmäßigerweise mit einem Alkoholüberschuß, d. h. das molare Verhältnis von Alkalimetallhydroxid zu Alkohol liegt im allgemeinen im Bereich von 1 : > 1 bis 1 : 12. Lediglich, wenn die Menge des eingesetzten Alkohols kleiner als ca. 3 Gewichtsteile pro 100 Gewichtsteile des zu isomerisierenden Produktes ist, sollte mit einem molaren Überschuß von Alkalimetallhydroxid gearbeitet werden, und zwar vorzugsweise im Bereich von 1,5 : 1 bis 5 : 1. Am besten ist es, die optimalen Katalysatormengen durch Vorversuche zu ermitteln.

Alternativ zu dem Katalysatorsystem a) kann bei dem erfindungsgemäßen Verfahren zunächst auch b) eine Mischung aus einem Lithium- oder Natriumalkoholat und einem Kalium-, Rubidium- oder Caesiumsalz eingesetzt werden.

Der Einsatz von Alkalimetallalkoholaten zur Isomerisierung von isolierten zu konjugierten Doppelbindungen ist - wie bereits erwähnt - bekannt. Technisch interessant sind hierbei bisher jedoch nur die Kaliumalkoholate, da sie gegenüber den Lithium- und den kostengünstigen Natriumalkoholaten eine bessere Isomerisierungsaktivität besitzen.

Da man zur Herstellung der Alkalimetallalkoholate im allgemeinen die Stufe des Alkalimetalls durchlaufen muß (vgl. Ullmanns Encyklopädie der technischen Chemie, 3. Band (1953), Seite 280), bestehen erhebliche Preisunterschiede zwischen Natrium- und Kaliumalkoholaten. Aus diesem Grunde bestand ein starkes wirtschaftliches Interesse daran, ein Isomerisierungsverfahren unter Verwendung von Natriumalkoholaten zu entwickeln, bei dem eine Isomerisierungsaktivität erreicht wird, die der beim Einsatz von Kaliumalkoholaten mindestens gleichwertig ist.

Als Alkoholatkomponente des Katalysatorsystems b) können bei dem vorliegenden Verfahren die Lithium- und vorzugsweise Natriumverbindungen aller ein- und mehrwertigen primären, sekundären und tertiären Alkohole eingesetzt werden. Bevorzugt sind die Alkoholate einwertiger (cyclo)-aliphatischer Alkohole mit bis einschließlich 10, vorzugsweise 3 bis 8 Kohlenstoffatomen.

Typische einsetzbare Alkoholate sind Lithium- und Natriumisopropylat, Lithium- und Natrium-tert.-Butylat sowie Lithium- und Natrium-2-ethylhexylat

Zusammen mit dem Lithium- oder Natriumalkoholat wird ein Kalium-, Rubidium- oder Caesiumsalz eingesetzt, wobei Kaliumsalze schon allein aus Kostengründen bevorzugt sind. Unter dem Begriff "Salz" sollen im Rahmen dieser Erfindung nicht nur die typischen Neutralisationsprodukte anorganischer und organischer Säuren, wie z. B. Kohlensäure, Schwefelsäure, Salzsäure, Ameisensäure, Essigsäure, Propionsäure und 2-Ethyl-hexansäure, mit den entsprechenden Alkalimetallhydroxiden, sondern auch die Hydroxide selbst verstanden werden.

Das Lithium- oder Natriumalkoholat wird im allgemeinen in einer Menge von 0,5 bis 10, vorzugsweise 1 bis 5, Gewichtsteilen pro 100 Gewichtsteile des zu isomerisierenden Homo- und/oder Copolymeren von 1,3-Dienen.

Die Menge des eingesetzten Kalium-, Rubidium- oder Caesiumsalzes beträgt im allgemeinen 0,1 bis 25, vorzugsweise 10 bis 20, Gewichtsteile pro 100 Gewichtsteile des zu isomerisierenden Produktes.

Da das eingesetzte Kalium-, Rubidium- oder Caesiumsalz in den meisten Fällen weitgehend ungelöst in dem Reaktionsgemisch vorliegt, ist es nicht sinnvoll, Bereiche für das molare Verhältnis der beiden Katalysatorbestandteile anzugeben. Die optimalen Isomerisierungsbedingungen können leicht durch orientierende Vorversuche ermittelt werden.

Schließlich kann bei dem erfindungsgemäßen Verfahren statt der Katalysatorsysteme a) und b) das Katalysatorsystem c), bestehend aus Natriumhydroxid, einem Alkohol und einer aprotischen Verbindung, eingesetzt werden.

Als Alkohole kommen dabei wieder primäre, sekundäre und tertiäre Alkohole mit bis zu 10 Kohlenstoffatomen, die gegebenenfalls funktionelle Gruppen, wie z. B. $-NH_2$, tragen, infrage. Bevorzugt werden Alkohole mit 3 bis 8 Kohlenstoffatomen eingesetzt.

Typische Alkohole sind wiederum die bereits beim Katalysatorsystem a) genannten Vertreter.

Als weitere Komponente enthält der Isomerisierungskatalysator dann noch eine polare, aprotische Verbindung.

Geeignete polare, aprotische Verbindungen sind z. B. Dimethylsulfoxid, Dimethylformamid, Dimethylacetamid, Tetramethylharnstoff, Tetramethylensulfon, N-Methylpyrrolidon, Isophoron, Acetophenon, Ethylencarbonat und Polyethylenglykoldiether der allgemeinen Formel $R-O-(-CH_2-CH_2-O-)_n-R$, mit n gleich 1 bis 20, vorzugsweise 1 bis 10, und R gleich $C_{1-4}$-Alkyl. Bevorzugt sind neben den

**0086894**

Polyethylenglykoldialkylethern Dimethylsulfoxid, Dimethylformamid und N-Methylpyrrolidon.

Das Natriumhydroxid wird im allgemeinen als Handelsprodukt in fester Form in einer Menge von 0,2 bis 20, vorzugsweise 0,5 bis 10, Gewichtsteilen pro 100 Gewichtsteile des zu isomerisierenden Homo- und/oder Copolymeren von 1,3-Dienen eingesetzt.

Die Menge des eingesetzten Alkohols beträgt im allgemeinen wieder 0,5 bis 20, vorzugsweise 1 bis 10, Gewichtsteile pro 100 Gewichtsteile des zu isomerisierenden Produkts.

Die polare, aprotische Verbindung wird schließlich im allgemeinen in einer Menge von 1 bis 100 Gramm pro 100 Gramm Polymer zugesetzt. Die zuzusetzende Menge richtet sich dabei nach dem angestrebten Isomerisierungsgrad und der gewählten Reaktionstemperatur.

Was die molaren Verhältnisse der einzelnen Katalysatorkomponenten in der Mischung c) anbetrifft, so arbeitet man zweckmäßigerweise mit einem molaren Alkoholüberschuß, bezogen auf Natriumhydroxid, d. h. das molare Verhältnis von Natriumhydroxid zu Alkohol liegt im allgemeinen im Bereich von 1 : > 1 bis 1 : 12. Lediglich, wenn die Menge des eingesetzten Alkohols kleiner als ca. 3 Gewichtsteile pro 100 Gewichtsteile des zu isomerisierenden Produkts ist, sollte mit einem molaren Überschuß von Natriumhydroxid gearbeitet werden, und zwar vorzugsweise im Bereich von 1,5 : 1 bis 5 : 1.

Das molare Verhältnis der polaren, aprotischen Verbindung zu Natriumhydroxid liegt im Bereich von 0,01 bis 100.

Am besten ist es, wenn die optimalen Mengen der einzelnen Katalysatorbestandteile durch Vorversuche ermittelt werden.

Das erfindungsgemäße Verfahren wird bei Temperaturen von 80 bis 220 $^{o}$C, vorzugsweise 120 bis 200 $^{o}$C, besonders bevorzugt bei 140 bis 190 $^{o}$C, durchgeführt.

Gemäß einer besonderen Ausführungsform des erfindungsgemäßen Verfahrens ist es beim Einsatz der Katalysatorsysteme a) und b) möglich, durch den Zusatz einer polaren aprotischen Verbindung die Isomerisierungstemperatur bei konstanter Katalysatorkonzentration und gleichbleibendem Isomerisierungsgrad um bis zu 100 $^{o}$C zu senken. Das heißt, durch den Zusatz der bereits beim Katalysatorsystem c) genannten aprotischen Verbindungen kann das erfindungsgemäße Verfahren dann bei Temperaturen von 0 bis 150 $^{o}$C, vorzugsweise 20 bis 130 $^{o}$C, durchgeführt werden.

Die polare, aprotische Verbindung wird dabei wieder - wie beim Katalysatorsystem c) - in einer Menge von 1 bis 100 Gramm pro 100 Gramm Polymer zugesetzt. Die zuzusetzende Menge richtet sich auch hier nach dem angestrebten Isomerisierungsgrad und der gewählten Reaktionstemperatur.

Das zu isomerisierende Polymere kann beim Einsatz aller Katalysatorsysteme sowohl mit als auch ohne Lösemittel eingesetzt werden. Der Einsatz eines Lösemittels ist dann angebracht bzw. erforderlich, wenn die Viskosität des Polymeren so hoch ist, daß die homogene Verteilung der Katalysatorkomponenten nicht gewährleistet ist.

Als Lösemittel kommen z. B. aliphatische, cycloaliphatische und aromatische Kohlenwasserstoffe infrage. Typische Vertreter aus diesen Gruppen sind Hexan, Octan, Cyclohexan, Toluol und Xylol.

Bei der Durchführung des erfindungsgemäßen Verfahrens geht man im allgemeinen so vor, daß man das zu isomerisierende Polymer, gegebenenfalls gelöst in einem Lösemittel, mit dem Isomerisierungskatalysator vorlegt und auf die gewünschte Temperatur erwärmt.
Die erforderliche Reaktionszeit richtet sich nach Art und Menge des
Katalysators, nach dem zu isomerisierenden Polymeren und nach
der Temperatur. Die optimale Reaktionszeit läßt sich durch einige
orientierende Versuche leicht ermitteln. Die Reaktion wird z. B.
durch Abkühlen auf Raumtemperatur (25 $^{o}$C) beendet. Bis zu diesem
Verfahrensschritt werden alle Operationen bevorzugt unter Inertgasatmosphäre, wie z. B. Stickstoff oder Argon, durchgeführt. Anschließend wird der Katalysator durch wäßrige Wäsche und/oder eine
adsorptive Behandlung, z. B. mit Bleicherde, weitestgehend entfernt. Weitere Möglichkeiten zur Aufarbeitung bestehen aus dem
Einsatz von Ionenaustauschern oder dem Abfiltrieren oder Zentrifugieren, eventuell nach Erniedrigung der Viskosität z. B. mit
Hexan, der festen Katalysatorbestandteile.

Die nach dem erfindungsgemäßen Verfahren isomerisierten Homo-
und/oder Copolymeren von 1,3-Dienen, die bevorzugt zur Herstellung von Überzugsmitteln Verwendung finden, haben bis zu 30 %, bezogen auf die Gesamtzahl der Doppelbindungen, Dienstrukturen, die
konjugiert sind. Daneben treten auch in geringem Maße (< 1 %) konjugierte Tri- und Tetraen-Strukturen auf.

Das erfindungsgemäße Verfahren wird durch die nachfolgenden Beispiele näher erläutert.

Die darin angegebenen Konjuengehalte wurden UV-spektroskopisch
ermittelt und sind im Falle der Polybutadiene als Gewichtsprozente,
berechnet für $C_8H_{14}$ (konjugierte Diene), $C_8H_{12}$ (konjugierte Triene)
und $C_8H_{10}$ (konjugierte Tetraene), angegeben. Raumtemperatur bedeutet in allen Beispielen 25 $^{o}$C.

Alle Prozentangaben sind - sofern nicht anders angegeben - Gewichtsprozente.

Die Mikrostrukturen wurden IR-spektroskopisch bestimmt und stellen die anteilsmäßigen Werte der Doppelbindungen dar.

Beispiel 1

200 g eines Polybutadienöls ($\overline{M}n$ = 1 500) mit 76 % cis-1, 4-Strukturen und einem Gehalt an konjugierten Doppelbindungen von < 0, 5 % wurden in einem ausgeheizten und mit Argon gespülten Rührkolben (1 1 Fassungsvermögen), der mit Argonanschluß, Rührer, Thermometer und Abgasanschluß versehen war, vorgelegt. Die beschriebene Apparatur wurde auch bei allen folgenden Beispielen und Vergleichsbeispielen verwendet. Bei Zimmertemperatur (25 °C) wurden 16 g tert. -Butanol und 4 g pulverisiertes, handelsübliches Kaliumhydroxid zugegeben. Unter Rühren und schwachem Überleiten von Argon wurde der Kolbeninhalt auf eine Temperatur von 180 °C aufgeheizt. Dabei tritt eine Verfärbung der vorher farblosen Mischung nach Dunkelbraun ein. Bis zu einer Versuchslaufzeit von vier Stunden erfolgt stündlich eine Probennahme. Bei den Proben wurde die Isomerisierungsreaktion durch Abkühlen auf Zimmertemperatur beendet. Eine Aufarbeitung der stündlichen Proben wurde nicht durchgeführt. Die Endprobe wurde eine Stunde bei 3 600 U/min zentrifugiert, um feste Bestandteile des Katalysators abzutrennen. Zur Neutralisation wurde $CO_2$ gasförmig eingeblasen (3facher stöchiometrischer Überschuß zum eingesetzten Kaliumhydroxid).

Die IR-Untersuchung aller Proben ergab, daß sich die Mikrostruktur im gesamten Zeitraum nicht geändert hatte, d. h. die für die Trocknung wertvollen cis-1, 4-Anteile waren erhalten geblieben. Die Absolutgehalte der Doppelbindungen lagen bei 80 % bis 95 %.

Die zeitliche Entwicklung der durch UV-Absorption bestimmten Gehalte an konjugierten Strukturen ist in Tabelle 1 enthalten.

Tabelle 1

| Zeit | Konjuengehalte (%) | | |
|------|-------------------|------|------|
| (h) | konj. Diolefine | Triolefine | Tetraolefine |
|  | ber. als $C_8H_{14}$ | ber. als $C_8H_{12}$ | ber. als $C_8H_{14}$ |
| 1 | 11,6 | 0,06 | 0,02 |
| 2 | 11,6 | 0,07 | 0,02 |
| 3 | 15,0 | 0,08 | 0,03 |
| 4 | 26,0 | 0,12 | 0,04 |

Das Produkt wurde in einer Naßfilmschichtstärke von 50 µ auf ein Blech aufgetragen und in Anlehnung an DIN 53 150 hinsichtlich des Trocknungsverhaltens untersucht. Dabei ergaben sich folgende Werte:

Staubtrocknung    1 1/2 Stunden
Durchtrocknung    2     Stunden

Das Ausgangsprodukt hatte eine Staub- und Durchtrocknung von 7 Stunden.

Vergleichsbeispiel A

200 g handelsübliches Leinöl wurden unter den Bedingungen von Beispiel 1 versucht zu isomerisieren. Im UV trat keine Absorption auf, die konjugierten Strukturen zuzuordnen wäre.

Beispiele 2 und 3

Anstelle von Kaliumhydroxid wurden Rubidium- und Caesiumhydroxid eingesetzt. Dazu wurde so vorgegangen, daß man die in Beispiel 1 beschriebene Apparatur mit dem gleichen Polybutadienöl sowie 8 g des jeweiligen Alkalimetallhydroxids und 15 g tert, -Butanol beschickte und die Mischung auf 150 °C aufheizte. Nach 2 Stunden Versuchsdauer wurden folgende Werte erhalten:

Tabelle 2

| Bsp. Nr. | Art des Hydroxids | Konjuengehalt (%) | | |
|---|---|---|---|---|
| | | konj. Diolefine ber. als $C_8H_{14}$ | Triolefine ber. als $C_8H_{12}$ | Tetraolefine ber. als $C_8H_{10}$ |
| 2 | $RbOH \cdot 2H_2O$ | 15,7 | 0,18 | 0,14 |
| 3 | $CsOH \cdot H_2O$ | 14,2 | 0,21 | 0,17 |

Beispiele 4 bis 10

Zusammen mit verschiedenen Mengen Kaliumhydroxid wurden bei Einsatz von 100 g des in Beispiel 1 verwendeten Polybutadienöls verschiedene Alkohole eingesetzt. Die Ergebnisse dazu enthält Tabelle 3.

O. Z. 3796/3832/3833

Tabelle 3

| Bsp. Nr. | KOH (g) | Art und Menge (g) des Alkohols | | T (°C) | t (h) | Konjuengehalt (%) | |
|---|---|---|---|---|---|---|---|
| | | | | | | konj. Diolefine ber. als $C_8H_{14}$ | Triolefine ber. als $C_8H_{12}$ |
| 4 | 5 | $CH_3OH$ | 10 | 200 | 2 | 7,6 | 0,21 |
| 5 | 5 | $C_6H_5CH_2OH$ | 8 | 180 | 2 | 12,0 | 0,2 |
| 6 | 2,5 | Ethanolamin | 4,5 | 150 | 2 | 6,6 | 0,05 |
| 7 | 2,5 | Cyclohexanol | 8,0 | 150 | 2 | 19,4 | 0,08 |
| 8 | 2,5 | n-Butanol | 4,9 | 150 | 4 | 26,0 | 0,05 |
| 9 | 2,5 | iso-Butanol | 4,9 | 150 | 4 | 15,7 | 0,05 |
| 10 | 2,5 | sec-Butanol | 4,9 | 150 | 4 | 15,5 | 0,04 |

Beispiele 11 bis 15

Jeweils 5 g KOH und 8 g tert.-Butanol wurden in der in Beispiel 1 beschriebenen Weise mit verschiedenen Ölen zusammengebracht. Die Ergebnisse sind in Tabelle 4 enthalten.

Tabelle 4

| Bsp. Nr. | Öltyp [+] | T (°C) | t (h) | Konjuengehalt (%) Diolefine |
|------|------|------|------|------|
| 11 | VPO | 150 | 1 | 7,3 |
| 12 | PO 130 | 150 | 4 | 26,0 |
| 13 | PO 160 | 150 | 2 | 4,3 |
| 14 | St/Bu | 180 | 2 | 6,2 |
| 15 | PIP | 180 | 2 | 2,5 |

[+] Öltypen: VPO  Vinylpolyöl (hergestellt nach Beispiel 8 der DE-AS 23 61 782)

PO 130  Handelsprodukt der Chemische Werke Hüls AG

PO 160  Handelsprodukt der Chemische Werke Hüls AG

St/Bu  Copolymeröl Styrol/Butadien (hergestellt in Anlehnung an DE-PS 12 12 302)

PIP  mit LiBu hergestelltes Polyisoprenöl

Daten der Ausgangsöle (Konjuengehalte < 0,5 %):

| | $\overline{M}n$ | Verteilung der Doppelbindungen (%) | | | Styrol (%) |
|------|------|------|------|------|------|
| | | trans-1,4 | 1,2 | cis-1,4 | |
| VPO | 930 | 12 | 42 | 46 | 0 |
| PO 130 | 3 000 | 19 | 1 | 80 | 0 |
| PO 160 | 6 000 | 12 | 3 | 85 | 0 |
| St/Bu | 960 | 12 | 5 | 54 | 29 |
| PIP | 1 600 | 51 (3,4) | 3 | 41 (1,4) | 0 |

Beispiele 16 und 17

Beispiel 1 wurde in p-Xylol (Gewichtsverhältnis Öl : p-Xylol = 1 : 1) bei Siedetemperatur (138,4 $^\circ$C) wiederholt (Beispiel 16). Nach 3 Stunden wurde ein Konjuengehalt von 13,2 % bestimmt.

Ein analoger Versuch wurde bei 100 $^\circ$C in Toluol durchgeführt (Beispiel 17). Hier wurde nach 5 Stunden ein Konjuengehalt von 5 % erhalten.

Beispiele 18 bis 24

Bei gleicher Verfahrensweise wie in Beispiel 1 wurden die Mengen KOH und tert. -Butanol sowie die Temperatur variiert. Die Ergebnisse dazu enthält Tabelle 5 (Einsatzmenge Öl: 100 g).

Tabelle 5

| Bsp. Nr. | KOH (g) | tert. -Butanol (g) | T ($^\circ$C) | t (h) | Konjuengehalt (%) Diolefin |
|---|---|---|---|---|---|
| 18 | 3 | 1 | 180 | 2 | 6, 5 |
| 19 | 0, 5 | 8 | 180 | 2 | 15, 2 |
| 20 | 5 | 12 | 150 | 4 | 10, 5 |
| 21 | 15 | 5 | 150 | 2 | 14, 6 |
| 22 | 1 | 8 | 120 | 5 | 9, 8 |
| 23 | 1 | 8 | 150 | 5 | 11, 6 |
| 24 | 1 | 8 | 180 | 5 | 14, 6 |

Vergleichsbeispiel B

Mit 6 g KOH ohne Anwesenheit von Alkohol wurde während einer 5-stündigen Reaktionszeit bei 150 $^\circ$C lediglich ein Konjuengehalt von 0,76 % erhalten.

Beispiel 25

Zu 100 g des im Beispiel 1 eingesetzten Polybutadienöls wurden die auf die Herstellung von 3 g Na-tert.-butylat berechneten Mengen NaH (0,750 g) und tert.-Butanol (2,34 g) sowie 20 g handelsübliches $K_2CO_3$ gegeben. Der Kolbeninhalt wurde auf eine Temperatur von 180 °C gebracht. Die zeitliche Entwicklung der Konjuengehalte innerhalb von 5 Stunden ist in Tabelle 6 wiedergegeben.

Tabelle 6

| Reaktionszeit (h) | Konjuengehalt (%) Diolefine |
|---|---|
| 1 | 4,7 |
| 2 | 11,4 |
| 3 | 12,1 |
| 4 | 14,6 |
| 5 | 14,9 |

Vergleichsbeispiel C

Unter analogen Bedingungen wie im Beispiel 25 wurde ein Versuch mit Na-tert.-butylat (5 g/100 g Polymer), hergestellt durch stöchiometrische Umsetzung von NaH und tert.-Butanol, ohne $K_2CO_3$ durchgeführt. Die zeitliche Entwicklung der Konjuengehalte war folgendermaßen:

| Zeit (h) | Konjuengehalt (%) Diolefine |
|---|---|
| 1 | 4,4 |
| 2 | 4,7 |
| 3 | 5,6 |
| 4 | 6,0 |
| 5 | 6,5 |

**0086894**

Vergleichsbeispiel D

Ein Isomerisierungsversuch mit 15 g $K_2CO_3$ bei 180 $^{\circ}$C ergab nach 5 Stunden Reaktionszeit einen Konjuengehalt von nur 0,79 %.

Beispiele 26 bis 28

Anstelle von $K_2CO_3$ wurden unter ähnlichen Versuchsbedingungen wie im Beispiel 25 die Hydroxide von K, Rb und Cs eingesetzt. Die Bedingungen und Ergebnisse enthält Tabelle 7.

O. Z. 3796/3832/3833

Tabelle 7

| Bsp. Nr. | Na-tert.-butylat (g/100 g Öl) | Art und Menge (g/100 g Öl) des Hydroxids | | T (°C) | t (h) | Konjuengehalt (%) Diolefine |
|---|---|---|---|---|---|---|
| 26 | 5 | KOH | 5 | 150 | 1 | 12,2 |
| 27 | 7 | $RbOH \cdot 2H_2O$ | 7 | 150 | 1 | 11,4 |
| 28 | 5 | $CsOH \cdot H_2O$ | 8 | 150 | 2 | 13,1 |

Beispiele 29 bis 34

Anstelle von $K_2CO_3$ wurden unter ähnlichen Versuchsbedingungen wie im Beispiel 25 andere Kaliumsalze eingesetzt. Die Bedingungen und Ergebnisse enthält Tabelle 8.

Tabelle 8

| Bsp. Nr. | Na-tert.-butylat (g/100 g Öl) | Art und Menge (g/100 g Öl) des Kaliumsalzes | | T (°C) | t (h) | Konjuengehalt (%) Dieolefine |
|---|---|---|---|---|---|---|
| 29 | 5 | KCl | 15 | 180 | 4 | 18,1 |
| 30 | 4 | KCl | 15 | 180 | 5 | 12,1 |
| 31 | 5 | KCl | 10 | 180 | 5 | 3,9 |
| 32 | 5 | KCl | 15 | 150 | 5 | 3,3 |
| 33 | 5 | $CH_3COOK$ | 15 | 180 | 3 | 17,6 |
| 34 | 5 | $K_2SO_4$ | 15 | 200 | 4 | 14,4 |

<u>Beispiele 35 bis 38</u>

Beispiel 25 wurde unter ähnlichen Versuchsbedingungen mit anderen Alkoholaten wiederholt. Tabelle 9 enthält die Ergebnisse.

Tabelle 9

| Bsp. Nr. | Art und Menge (g/100 g Öl) des Alkoholats | | $K_2CO_3$ (g/100 g Öl) | T ($^{\circ}$C) | t (h) | Konjuengehalt (%) Diolefine |
|---|---|---|---|---|---|---|
| 35 | $NaOCH_3$ | 9 | 15 | 180 | 4 | 9, 1 |
| 36 | $NaOCH_3$ | 9 | 15 | 200 | 4 | 5, 3 |
| 37 | $LiO-tC_4H_9$ | 17, 4 | 15 | 180 | 4 | 8, 9 |
| 38[+)] | $LiO-tC_4H_9$ | 8, 5 | 15 | 180 | 4 | 11, 5 |

[+)] Li-tert.-butylat wurde hergestellt aus n-Butyl-Lithium und tert.-Butanol. Ansonsten dienen die Hydride oder Amide als Ausgangsmaterialien. Die Hydroxide in Mischung mit Alkohol und K-Salzen ergeben inaktive Katalysatoren.

Vergleichsbeispiele E und F

Die Beispiele 35 und 38 wurden ohne Zugabe von $K_2CO_3$ wiederholt. Im ersten Fall (Vergleichsbeispiel E) wurde ein Konjuengehalt von 1,7 %, im zweiten Falle (Vergleichsbeispiel F) ein solcher von 0,8 % erhalten.

Beispiele 39 und 40

Na-tert.-butylat (hergestellt wie im Beispiel 25 beschrieben) wurde zusammen mit KOH (5 g/100 g Öl) als Isomerisierungskatalysator verwendet. Die Ergebnisse enthält Tabelle 10.

Tabelle 10

| Bsp. Nr. | Na-tert.-butylat (g/100 g Öl) | T ($^{o}$C) | t (h) | Konjuengehalt (%) Diolefine |
|---|---|---|---|---|
| 39 | 5 | 150 | 1 | 12,2 |
| 40 | 5 | 180 | 1 | 11,5 |

Beispiele 41 bis 45

Beispiel 25 wurde unter ähnlichen Bedingungen (5 g Na-tert.-butylat (hergestellt aus $NaNH_2$ und tert.-Butanol) /100 g Öl sowie 15 g $K_2CO_3$/100 g Öl) mit Ölen anderer Zusammensetzung und Mikrostruktur sowie unterschiedlichen Molekulargewichts wiederholt. Die Ergebnisse dazu enthält Tabelle 11.

Tabelle 11

| Bsp. Nr. | Öltyp [+] | T (°C) | t (h) | Konjuengehalt (%) Diolefine |
|---|---|---|---|---|
| 41 | VPO | 180 | 5 | 4,3 |
| 42 | PO 130 | 180 | 4 | 8,3 |
| 43 | PO 160 | 180 | 1 | 5,0 |
| 44 | St/Bu | 180 | 2 | 5,4 |
| 45 | PIP | 180 | 2 | 3,1 |

[+] Erläuterungen siehe Tabelle 4

Beispiele 46 bis 55

Unter Einsatz des im Beispiel 1 beschriebenen Polybutadienöls wurden die Mengen an Na-Alkoholat und $K_2CO_3$ variiert. Die Ergebnisse sind in Tabelle 12 aufgeführt.

Tabelle 12

| Bsp. Nr. | Na-tert.-butylat (g/100 g Öl) | $K_2CO_3$ (g/100 g Öl) | T (°C) | t (h) | Konjuengehalt (%) Diolefine |
|---|---|---|---|---|---|
| 46 | 2 | 15 | 180 | 4 | 8,8 |
| 47 | 5 | 15 | 180 | 5 | 18,2 |
| 48 | 10 | 15 | 150 | 4 | 12,7 |
| 49 | 5 | 15 | 200 | 1 | 8,1 |
| 50 | 10 | 30 | 150 | 3 | 15,6 |
| 51 | 5 | 10 | 150 | 5 | 13,2 |
| 52 | 5 | 5 | 180 | 1 | 11,4 |
| 53 | 5 | 3 | 180 | 3 | 13,6 |
| 54 | 5 | 1 | 180 | 3 | 8,7 |
| 55 | 5 | 0,5 | 180 | 4 | 8,5 |

## Beispiele 56 und 57

Es wurde das im Beispiel 1 beschriebene Polybutadienöl eingesetzt. Eine bei Siedetemperatur des Toluols (110 °C) durchgeführte Isomerisierung einer im Gewichtsverhältnis Öl : Toluol = 1 : 1-Mischung mit 5 g Na-tert.-butylat/100 g Öl sowie 20 g $K_2CO_3$/100 g Öl (Beispiel 56) ergab nach 4 Stunden einen Konjuengehalt von 3,3 %.

Analog wurde bei Siedetemperatur des p-Xylols (138,4 °C) mit 5 g Na-tert.-butylat/100 g Öl und 10 g $K_2CO_3$/100 g Öl (Beispiel 57) ein Konjuengehalt von 13,2 % erreicht.

## Beispiel 58

Die Mikrostrukturen wurden IR-spektroskopisch bestimmt und stellen die anteilsmäßigen Werte der Doppelbindungen dar.

## Beispiel 1

200 g eines Polybutadienöls mit $\overline{Mn}$ = 1 500 und 72 % cis-1,4-, 27 % trans-1,4-Strukturen und einem Gehalt an konjugierten Doppelbindungen von < 0,5 % wurden in einem ausgeheizten und mit Argon gespülten Rührkolben (1 000 ml Fassungsvermögen), der mit Argonanschluß, Rührer, Thermometer und Abgasanschluß versehen war, vorgelegt. Die beschriebene Apparatur wurde auch bei allen folgenden Beispielen und Vergleichsbeispielen verwendet. Bei Raumtemperatur ( 25 °C ) wurden 10 g tert.-Butanol, 6 g pulverisiertes, handelsübliches Kaliumhydroxid zusammen mit 100 g N-Methylpyrrolidon vorgegeben. Unter Rühren und schwachem Überleiten von Argon wurde der Kolbeninhalt auf eine Temperatur von 50 °C aufgeheizt. Dabei tritt eine Verfärbung der vorher farblosen Mischung nach Schwarz-Braun ein. Bis zu einer Versuchszeit von 4 Stunden erfolgte stündlich eine Probennahme. Die Isomerisierungsreaktion wurde jeweils durch Abkühlen auf Raumtemperatur beendet, die flüchtigen Anteile wurden in Ölpumpenvakuum bei 140 °C entfernt. Die Endprobe wurde eine Stunde bei 3 600 U/min zentrifugiert, um feste Bestandteile des Katalysators abzutrennen. Zur Neutralisation wurde $CO_2$ gasförmig eingeblasen (3facher stöchiometrischer Überschuß zum eingesetzten Kaliumhydroxid).

Die IR-Untersuchung aller Proben ergab, daß sich die Mikrostruktur im gesamten Zeitraum nicht geändert hatte, d. h. die für die Trocknung wertvollen cis-1,4-Anteile waren enthalten geblieben. Der Gehalt an konjugierten Diolefinen, berechnet als Gewichtsprozent $C_8H_{14}$ durch UV-Absorption, erreichte schon nach 2 Stunden den Maximalwert von 23,1 Gewichtsprozent. Konjugierte Triolefine, berechnet als Gewichtsprozent $C_8H_{12}$, waren zu 0,2 Gewichtsprozent enthalten.

Beispiele 59 bis 72

In analoger Verfahrensweise zu Beispiel 58 wurden Versuche unter veränderten Reaktionsbedingungen und mit verschiedenen polaren, aprotischen Zusätzen durchgeführt. Die Abkürzungen bedeuten:

t-BuOH   = tert.-Butanol
NMP      = N-Methylpyrrolidon
DMSO     = Dimethylsulfoxid
PEG      = Polyethylenglykol-di-tert.-butylether (MG 514)
EGE      = Ethylenglykoldiethylether
DMF      = Dimethylformamid

Die Ergebnisse zeigt die Tabelle 13.

Tabelle 13

Je Ansatz wurden 200 g Polybutadienöl (siehe Beispiel 58) eingesetzt mit 6 g KOH und 10 g tert. -Butanol.

| Bsp. Nr. | Zusatz Art | Menge (g) | Temp. ($^{o}$C) | Zeit (h) | konj. Diolefine ($C_8H_{14}$) (Gew. -%) |
|---|---|---|---|---|---|
| 58 | NMP | 100 | 50 | 2 | 23,1 |
| 59 | NMP | 6 | 120 | 2 | 13,0 |
| 60 | NMP | 13,4 | 120 | 2 | 18,5 |
| 61 | NMP | 6 | 80 | 3 | 11,8 |
| 62 | NMP | 100 | 20 | 1 | 23,3 |
| 63 | NMP | 200 | 20 | 2 | 18,0 |
| 64 | DMSO | 100 | 20 | 3 | 17,1 |
| 65 | DMSO | 100 | 50 | 1 | 12,2 |
| 66 | DMSO | 10 | 80 | 3 | 14,0 |
| 67 | DMSO | 6 | 80 | 3 | 11,2 |
| 68 | DMSO | 6 | 120 | 1 | 15,6 |
| 69 | EGE | 8 | 120 | 2 | 13,5 |
| 70 | PEG | 12 | 120 | 2 | 19,5 |
| 71 | PEG | 6 | 120 | 1 | 21,0 |
| 72 | DMF | 200 | 120 | 2 | 18,6 |

Vergleichsbeispiele G bis L

In der im Beispiel 58 beschriebenen Apparatur wurden Versuche ohne Zusatz einer aprotischen Verbindung durchgeführt. Die Ergebnisse zeigt Tabelle 14.

0086894

Tabelle 14

Vergleichsbeispiele mit dem gleichen Polybutadienöl aber ohne Zusatz

| Bsp. Nr. | KOH (g) | t-Butanol (g) | Temp. ($^{o}$C) | Zeit (h) | konj. Diolefine (Gew.-%) |
|---|---|---|---|---|---|
| .G | 6 | 10 | 80 | 5 | 0,8 |
| H | 16 | 16 | 100 | 5 | 4,9 |
| I | 6 | 10 | 120 | 3 | 8,0 |
| J | 6 | 10 | 150 | 2 | 14,6 |
| K | 16 | 10 | 150 | 1 | 21,0 |
| L | 1 | 10 | 170 | 3 | 19,5 |

Beispiel 73

100 g eines Polybutadienöls ($\overline{Mn}$ 1 500 und Mikrostruktur mit 75 % cis-1,4, 24 % trans-1,4 und 1 % 1,2-Doppelbindungen und einem Gehalt an konjugierte Doppelbindungen von < 0,5 %) wurden in einen aufgeheizten und mit Argon gespülten Rührkolben (0,5 l), der mit Inertgasanschluß, Rührer, Thermometer und Abgasanschluß versehen war, vorgelegt. Bei Raumtemperatur wurden 10 g N-Methylpyrrolidon, 1,25 g Natriumhydroxid und 5,0 g tert.-Butanol zugegeben. Unter Rühren und schwachem Überleiten von Argon wurde der Kolbeninhalt auf 150 $^{o}$C aufgeheizt. Dabei trat eine Verfärbung der vorher farblosen Mischung nach Dunkelbraun bis Schwarz ein.

Bis zu einer Versuchszeit von 3 Stunden bei 150 $^{o}$C erfolgte stündlich eine Probennahme. Die Isomerisierungsreaktion wurde jeweils durch Abkühlen auf Raumtemperatur beendet, die flüchtigen Anteile wurden in Ölpumpenvakuum bei 140 $^{o}$C entfernt. Die Endprobe wurde eine Stunde bei 3 600 U/min zentrifugiert, um feste Bestandteile des Katalysators abzutrennen. Zur Neutralisation wurde $CO_2$ gasförmig eingeblasen (3facher stöchiometrischer Überschuß zum eingesetzten Natriumhydroxid).

Die IR-Untersuchung aller Proben ergab, daß sich die Mikrostruktur im gesamten Zeitraum nicht geändert hatte, d. h. die für die Trocknung wertvollen cis-1,4-Anteile waren enthalten geblieben. Der Gehalt an konjugierten Diolefinen, berechnet als Gewichtsprozent $C_8H_{14}$ durch UV-Absorption, betrug nach 3 Stunden 21,1 Gewichtsprozent. Konjugierte Triolefine, berechnet als Gewichtsprozent $C_8H_{12}$, waren zu 0,03 Gewichtsprozent enthalten.

Beispiele 74 bis 92 und Vergleichsbeispiele M bis P

In der gleichen Apparatur und in gleicher Arbeitsweise wie im Beispiel 73 wurden Versuche unter veränderten Reaktionsbedingungen und mit verschiedenen polaren, aprotischen Verbindungen durchgeführt. Die Abkürzungen - soweit noch nicht erläutert - bedeuten:

PEG 600      = Polyethylenglykol mit einem Molekulargewicht von 600

Diglyme      = Glykoldimethylether

Bei unseren Handelsprodukten handelt es sich im einzelnen um folgende Substanzen:

MARLIPAL® 34/60    = Gemisch aus Isotridecyl- und Isotetradecyl-alkohol verethert mit 6 Ethylenoxideinheiten

MARLIPAL  34/100   = Gemisch aus Isotridecyl- und Isotetradecyl-alkohol verethert mit 10 Ethylenoxideinheiten

MARLIPAL  34/200   = Gemisch aus Isotridecyl- und Isotetradecyl-alkohol verethert mit 20 Ethylenoxideinheiten

MARLOPHEN® 85      = mit 5 Ethylenoxideinheiten verethertes Nonyl-phenol

MARLOPHEN  89      = mit 9 Ethylenoxideinheiten verethertes Nonyl-phenol

MARLOPHEN 814      = mit 14 Ethylenoxideinheiten verethertes Nonyl-phenol

Die Ergebnisse zeigt Tabelle 15.

## Tabelle 15

Je Ansatz wurden 100 g Polybutadienöl (siehe Beispiel 73) und 5 g t-BuOH eingesetzt.

| Bsp. bzw. Vgl.-Bsp. Nr. | NaOH [g] | Polare, aprotische Verbindung | | Temp. [°C] | Zeit [h] | Konj. Diolefine ($C_8H_{14}$) [Gew.-%] |
|---|---|---|---|---|---|---|
| | | Art | Menge [g] | | | |
| 74 | 1,25 | NMP | 20 | 120 | 5 | 5,1 |
| 75 | 2,5 | NMP | 100 | 150 | 1 | 16,1 |
| 76 | 2,5 | NMP | 10 | 150 | 5 | 13,9 |
| 77 | 2,5 | NMP | 50 | 150 | 2 | 17,5 |
| 78 | 1,25 | NMP | 20 | 180 | 1 | 18,2 |
| 79 | 2,5 | NMP | 20 | 180 | 2 | 12,4 |
| 80 | 1,25 | DMSO | 20 | 150 | 2 | 18,5 |
| 81 | 2,5 | DMSO | 10 | 150 | 5 | 14,4 |
| 82 | 1,25 | DMSO | 20 | 180 | 1 | 15,3 |
| 83 | 2,5 | DMSO | 50 | 150 | 1 | 20,0 |
| 84 | 2,5 | DMF | 50 | 150 | 4 | 10,5 |
| 85 | 1,25 | MARLI-PAL 34/60 | 20 | 150 | 3 | 9,7 |
| 86 | 1,25 | MARLI-PAL 34/100 | 20 | 150 | 4 | 9,2 |
| 87 | 2,5 | MARLI-PAL 34/200 | 20 | 150 | 3 | 15,0 |
| 88 | 1,25 | MARLO-PHEN 89 | 20 | 150 | 2 | 11,5 |
| 89 | 2,5 | MARLO-PHEN 85 | 20 | 150 | 4 | 18,1 |

Tabelle 15 - Fortsetzung

| Bsp. bzw. Vgl.-Bsp. Nr. | NaOH $[g]$ | Polare, aprotische Verbindung | | Temp. $[^\circ C]$ | Zeit $[h]$ | Konj. Diolefine $(C_8H_{14})$ $[Gew.-\%]$ |
|---|---|---|---|---|---|---|
| | | Art | Menge $[g]$ | | | |
| 90 | 2,5 | MARLO-PHEN 814 | 20 | 150 | 3 | 20,4 |
| 91 | 1,25 | PEG 600 | 20 | 150 | 5 | 7,6 |
| 92 | 2,5 | Diglyme | 10 | 170 | 4 | 7,7 |
| M | 1,25 | - | - | 150 | 5 | 0,44 |
| N | 2,5 | - | - | 150 | 5 | 0,47 |
| O | 2,5 | - | - | 120 | 5 | 0,42 |
| P | 2,5 | - | - | 180 | 3 | 1,1 |

Beispiele 93 bis 95

Jeweils 2,5 g NaOH, 5 g tert.-Butanol und 20 g N-Methylpyrrolidon wurden in der im Beispiel 73 beschriebenen Apparatur und Arbeitsweise mit jeweils 100 g verschiedener Polybutadienöle zusammengebracht. Die Ergebnisse zeigt Tabelle 16.

Tabelle 16

| Bsp. Nr. | Öltyp[+) | Temp. $[^\circ C]$ | Zeit $[h]$ | Konj. Diolefine $(C_8H_{14})$ $[Gew.-\%]$ |
|---|---|---|---|---|
| 93 | VPO | 170 | 4 | 7,1 |
| 94 | PO 130 | 150 | 4 | 5,9 |
| 95 | PO 160 | 150 | 3 | 7,0 |

[+) Erläuterung siehe Tabelle 4

Daten der Ausgangsöle (Konjuengehalt < 0,5 %)

| Öltyp | $\overline{Mn}$ | Verteilung der Doppel-bindungen | | |
|---|---|---|---|---|
| | | trans-1,4 | 1,2 | cis-1,4 |
| VPO | 930 | 12 | 42 | 46 |
| PO 130 | 3 000 | 19 | 1 | 80 |
| PO 160 | 6 000 | 8-16 | 2-4 | 80-90 |

Beispiele 96 bis 101

Zusammen mit jeweils 2,5 g NaOH, 20 g N-Methylpyrrolidon und 100 g des im Beispiel 73 eingesetzten Polybutadienöls wurden in der Apparatur und Arbeitsweise gemäß Beispiel 73 verschiedene Alkohole eingesetzt. Die Ergebnisse zeigt Tabelle 17.

Tabelle 17

| Bsp. Nr. | Alkohol | | Temp. $[^{o}C]$ | Zeit $[h]$ | Konj. Diolefine $(C_8H_{14})$ $[Gew.-\%]$ |
|---|---|---|---|---|---|
| | Art | Menge $[g]$ | | | |
| 96 | n-Butanol | 5 | 150 | 2 | 15,9 |
| 97 | Cyclohexanol | 5 | 150 | 2 | 13,8 |
| 98 | Benzylalkohol | 5 | 150 | 1 | 7,9 |
| 99 | 2-Ethylhexanol | 5 | 150 | 4 | 13,4 |
| 100 | Ethanol | 5 | 150 | 2 | 12,1 |
| 101 | Propandiol-1,2 | 5 | 150 | 4 | 7,3 |

Patentansprüche:

1. Verfahren zur Isomerisierung von isolierten zu konjugierten Doppelbindungen in niedermolekularen Homo- und/oder Copolymeren von 1,3-Dienen mit Hilfe eines Isomerisierungskatalysators und gegebenenfalls in Gegenwart eines Lösemittels,
dadurch gekennzeichnet,
daß man als Isomerisierungskatalysator eine Mischung aus

a) einem Hydroxid der Alkalimetalle Kalium, Rubidium oder Caesium und einem Alkohol oder

b) einem Lithium- oder Natriumalkoholat und einem Kalim-, Rubidium- oder Caesiumsalz oder

c) Natriumhydroxid, einem Alkohol und einer polaren, aprotischen Verbindung einsetzt und

die Isomerisierung bei einer Temperatur von 80 bis 220 $^\circ$C durchführt.

2. Verfahren nach Anspruch 1,
dadurch gekennzeichnet,
daß man die Mischungen gemäß a) und b) zusammen mit einer polaren, aprotischen Verbindung einsetzt und die Isomerisierung bei einer Temperatur von 0 bis 150 $^\circ$C durchführt.

3. Verfahren nach den Ansprüchen 1 und 2,
dadurch gekennzeichnet,
daß man als polare, aprotische Verbindung Dimethylsulfoxid, Dimethylformamid, N-Methylpyrrolidon und Polyethylenglykoldiether der allgemeinen Formel $R-O(CH_2-CH_2-O)_n R$, mit n gleich 1 bis 20 und R gleich $C_{1-4}$-Alkyl, einsetzt.

O. Z. 3796/3832/3833
0086894

4. Verfahren nach den Ansprüchen 1 bis 3,

   dadurch gekennzeichnet,

   daß man unter Inertgasatmosphäre isomerisiert.

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | GB-A-2 054 606 (HÜLS) <br><br> * Ansprüche 1,2 * <br><br> ----- | | C 08 C 19/10 |

**RECHERCHIERTE SACHGEBIETE (Int. Cl ³)**

C 08 C

Der vorliegende Recherchenbericht wurde für alle Patentansprüche erstellt.

| Recherchenort <br> DEN HAAG | Abschlußdatum der Recherche <br> 26-04-1983 | Prüfer <br> VAN HUMBEECK F.W.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82